# FASCICULE DE BREVET EUROPEEN

(11) **EP 4 405 193 B1**
(45) Date de publication et mention de la délivrance du brevet: **13.08.2025**
(21) Numéro de dépôt: 22783508.9
(22) Date de dépôt: 22.09.2022
(51) Int. Cl.: B60K 35/10, B60K 35/28, B60K 35/85

(54) **SYSTÈME ET PROCÉDÉ DE COMMUNICATION MULTIMÉDIA POUR VÉHICULE AUTOMOBILE**
MULTIMEDIA-KOMMUNIKATIONSSYSTEM UND VERFAHREN FÜR EIN KRAFTFAHRZEUG
MULTIMEDIA COMMUNICATION SYSTEM AND METHOD FOR A MOTOR VEHICLE

(30) Priorité: 23.09.2021 FR 2110026
(43) Date de publication de la demande: 31.07.2024
(73) Titulaire: Ampere SAS, 92100 Boulogne-Billancourt (FR)
(72) Inventeur: ROSSELLO, Norbert, 78084 Guyancourt cedex (FR)
(74) Mandataire: Renault Group
(86) Numéro de dépôt international: PCT/EP2022/076443
(87) Numéro de publication internationale: WO 2023/046865

(56) Documents cités:
- EP-A1- 3 660 726
- CN-A- 104 050 586

## Description

La présente invention concerne le domaine des systèmes de communication pour les véhicules automobiles, et elle vise plus particulièrement les systèmes de communications interactifs, c'est-à-dire les systèmes de communication qui induisent une interaction directe ou indirecte avec le conducteur du véhicule.

L'environnement de conduite et de vie à bord des véhicules automobiles s'enrichit continuellement de nouvelles fonctionnalités. Certaines de ces fonctions induisent une sollicitation du conducteur du véhicule et/ou une interaction de celui-ci avec le système de communication multimédia embarqué. Ces interactions peuvent être simples, telles que, par exemple, l'affichage ou la diffusion audio d'un simple message informatif, ou elles peuvent être plus complexes, telles que, par exemple, une saisie ou une validation d'informations par le conducteur suite à la diffusion d'un message visuel ou auditif. Ces interactions s'effectuent entre le conducteur et le système de communication multimédia, le conducteur recevant de ce dernier, par l'intermédiaire d'une interface appropriée, une pluralité d'informations et/ou de suggestions isolées de son environnement de conduite et devant les prendre en compte instantanément pendant son activité de conduite.

L'attention dont le conducteur a besoin pour appréhender ces informations et/ou suggestions et pour répondre le cas échéant s'ajoute donc à celle dont il a besoin pour conduire.

Ce processus augmente la charge mentale du conducteur et peut donc le fatiguer et, par conséquent, induire un risque pour sa conduite.

On connaît dans l'art antérieur le document CN 104 050 586, qui se rapporte à un gestionnaire de publicité pour un système multimédia de véhicule. On connaît également le document EP 3 660 726, qui se rapporte uniquement au domaine des agents conversationnels sur une interface homme- machine.

L'invention a pour but de proposer une solution permettant une prise en compte de l'opportunité d'échange entre le système de communication multimédia et le conducteur, afin d'optimiser la compatibilité des interactions du système multimédia du véhicule avec le contexte de la conduite.

Dans ce but, selon un premier aspect, l'invention a pour objet un système de communication multimédia pour véhicule automobile configuré pour générer des requêtes d'interaction, pour attribuer à chacune des requêtes d'interaction un indicateur représentatif d'un type d'interaction, et pour transmettre ces requêtes d'interaction à un occupant du véhicule via un module de communication, caractérisé en ce qu'il comprend un module de gestion des requêtes d'interaction qui comporte :
- un module d'analyse contextuelle configuré, d'une part, pour définir, sur la base d'une pluralité de données contextuelles d'une situation de conduite du véhicule à un instant donné, une pluralité de vecteurs d'état contextuels de la situation de conduite, chaque vecteur d'état contextuel regroupant une pluralité de paramètres contextuels de la situation de conduite,
- un organe de concaténation configuré pour réunir les vecteurs d'état contextuels de la situation de conduite en un vecteur d'état global de la situation de conduite,
- un cluster général de données dans lequel sont enregistrés une pluralité de vecteurs d'état globaux prédéfinis dont chacun est affecté, pour chaque type d'interaction, d'un label représentatif d'une autorisation ou d'une interdiction de présentation de la requête d'interaction à l'occupant du véhicule,
- un module de décision configuré pour comparer le vecteur d'état global de la situation de conduite avec les vecteurs d'état globaux prédéfinis du cluster général de données afin d'en déduire un label, à associer au vecteur global de la situation de conduite, représentatif d'une autorisation ou d'une interdiction de présentation de la requête d'interaction à l'occupant du véhicule,
le module de gestion des requêtes étant configuré pour commander le module de communication à présenter la requête d'interaction à l'occupant du véhicule en fonction du label du vecteur d'état global de la situation de conduite.

Dans le cadre de l'invention, l'occupant du véhicule est préférentiellement le conducteur de celui-ci, et l'invention sera décrite dans ce cas dans le présent document, mais l'invention s'applique également à tout autre occupant du véhicule.

Une requête d'interaction est ici à comprendre comme une information délivrée par une interface du module de communication et induisant une interaction avec l'occupant, c'est-à-dire, ici, le conducteur.

Les requêtes d'interaction sont, par exemple, générées par un module de génération de requêtes du système de communication selon l'invention. Dans ce qui suit, les requêtes d'interaction seront également indifféremment désignées comme requêtes pour alléger la lecture.

L'interaction induite par une requête d'interaction peut être de plusieurs types. A titre d'exemples non limitatifs, l'interaction peut être :
- visuelle : le conducteur doit lire un message affiché sur un écran du véhicule,
- auditive : le conducteur doit écouter un message audio délivré par l'interface du module de communication,
- verbale : le conducteur doit parler,
- tactile : le conducteur doit agir sur un écran tactile du véhicule,
- ou toute combinaison d'une ou plusieurs des types d'interaction précités.

On définit ainsi une pluralité de types d'interactions.

Le module de génération de requêtes peut être configuré pour affecter, à chaque requête d'interaction, un indicateur représentatif du type d'interaction que la requête d'interaction induit avec l'occupant du véhicule. Cet indicateur peut être simple dans le cas où la requête d'interaction induit une action unique de la part du conducteur, ou il peut être complexe dans le cas où la requête d'interaction induit une succession et/ou une combinaison d'actions de la part du conducteur, par exemple l'écoute d'un message audio puis une réponse verbale à celui-ci.

Selon une variante, l'indicateur représentatif du type d'interaction induit par une requête d'interaction peut être défini au sein du module de gestion des requêtes précédemment évoqué.

La situation de conduite représente ici l'ensemble des données relatives au véhicule, à son environnement, et au conducteur à un instant donné, dès lors que le moteur du véhicule est démarré. La situation de conduite est donc une forme de vue instantanée du véhicule et de son environnement, intérieur et extérieur, dès lors que le moteur du véhicule est démarré, que le véhicule se déplace ou qu'il soit à l'arrêt. La situation de conduite comprend, à titre d'exemples non limitatifs, des données relatives au conducteur et à sa charge cognitive instantanée, des données relatives à la route, à la circulation.

Dans le système de communication selon l'invention, ces données sont représentées par des paramètres contextuels regroupés en catégories de paramètres, et, pour chaque catégorie de paramètres, le module d'analyse contextuelle définit un vecteur d'état contextuel regroupant, à un instant donné, des valeurs des paramètres contextuels de cette catégorie de paramètres pour la situation de conduite à cet instant. Chaque vecteur d'état contextuel regroupe donc des paramètres contextuels d'une catégorie telle que précitée. Ainsi, à titre d'exemple non limitatifs, le module d'analyse contextuelle pourra définir un vecteur d'état contextuel regroupant des paramètres relatifs au conducteur, un vecteur d'état contextuel relatif à l'itinéraire sur lequel se déplace le véhicule, un vecteur d'état contextuel relatif à la circulation sur cet itinéraire, un ou plusieurs vecteurs d'état contextuels relatifs au fonctionnement du véhicule, tout vecteur d'état regroupant un ou plusieurs paramètres contextuels représentatifs d'une catégorie de paramètres de la situation de conduite pouvant être défini.

A titre d'exemples non exhaustifs, le vecteur d'état contextuel regroupant des paramètres relatifs au conducteur pourra regrouper des paramètres contextuels tels que le nombre d'heures de conduite déjà effectuées depuis le démarrage du moteur du véhicule, une mobilité des yeux du conducteur, une fréquence cardiaque de celui-ci, une fréquence d'interaction avec l'interface du module de communication. Le vecteur d'état contextuel relatif à l'itinéraire pourra, de manière non exhaustive, regrouper des paramètres contextuels relatifs à un environnement urbain ou rural, rectiligne ou sinueux. Le vecteur d'état contextuel relatif à la circulation pourra, pour sa part, regrouper, à titre d'exemples non exhaustifs, des paramètres contextuels relatifs à l'éclairage de la route (jour, nuit, éclairage artificiel, pas d'éclairage, ...), à l'état du trafic, à la présence de travaux.

Pour résumer, chaque vecteur d'état contextuel est donc un vecteur multidimensionnel dont les dimensions sont fonction du nombre de paramètres contextuels choisis pour le définir.

Les valeurs de chaque paramètre contextuel sont avantageusement définies dans le module d'analyse contextuelle, ce dernier étant configuré pour communiquer avec un ensemble de capteurs du véhicule et de son environnement qui permettent de quantifier une valeur à un instant donné associée au paramètre contextuel considéré.

Pour chaque paramètre contextuel, une plage de variations est arbitrairement préalablement définie de telle manière qu'elle offre une sensibilité suffisante pour distinguer toute variation significative du paramètre considéré sans conduire à une quantité trop importante d'information qui pourrait surcharger une capacité de calcul du module d'analyse contextuelle. Chaque paramètre de chaque vecteur d'état contextuel possède donc une plage de variation qui lui est propre.

Selon un exemple, les différents vecteurs d'état peuvent être normés.

L'organe de concaténation est configuré pour réunir l'ensemble des vecteurs d'état contextuels d'une situation de conduite, définis par le module d'analyse contextuelle, en un vecteur d'état global de cette situation de conduite. Le vecteur d'état global de la situation de conduite est donc un vecteur multidimensionnel dont le nombre de dimensions est égal à la somme des dimensions des vecteur d'état contextuels de cette situation de conduite.

Tel que cela a été évoqué, le système de communication selon l'invention est tel que le module de gestion des requêtes comprend un cluster général de données dans lequel sont enregistrés une pluralité de vecteurs d'état globaux prédéfinis. Chaque vecteur d'état global prédéfini est issu d'une situation de conduite prédéfinie, par exemple par le calcul et/ou lors de tests du véhicule réalisés préalablement à sa commercialisation, ou issu d'une situation de conduite préalablement rencontrée par le véhicule équipé du système de communication selon l'invention.

Au sein de ce cluster général de données, il a été précisé que chaque vecteur d'état global est affecté, pour chaque type d'interaction, d'un label représentatif d'une autorisation ou d'une interdiction de présentation, à l'occupant du véhicule, d'une requête induisant ledit type d'interaction.

Chaque label comprend donc deux parties : d'une part, une première partie représentant un indicateur de type d'interaction tel que précédemment défini, et, d'autre part, une deuxième partie représentative d'une autorisation ou d'une interdiction de présentation, au conducteur, d'une requête induisant ce type d'interaction. Cette deuxième partie peut, selon différents exemples, être définie par le calcul, ou par un étalonnage préalable du véhicule, ou sur la base de réponses préalablement données par un conducteur d'un véhicule à ce type de requête dans la situation de conduite prédéfinie représentée par le vecteur d'état global prédéfini considéré.

En d'autres termes, les labels affectés à chaque vecteur d'état global du cluster général de données représentent une forme d'étalonnage du comportement d'un conducteur d'un véhicule en réponse à une pluralité de requêtes prédéfinies induisant différents types d'interactions dans une pluralité de situations de conduite prédéfinies.

A titre d'exemple non limitatif, un vecteur d'état global prédéfini représentant une situation de conduite dans laquelle le véhicule est à l'arrêt dans un bouchon pourra être affecté d'un label autorisant la présentation, au conducteur, d'une requête induisant de sa part une interaction visuelle (par exemple la lecture d'un message affiché sur un écran du véhicule) combinée à une interaction tactile (par exemple la validation de l'information indiquée par ce message), alors qu'un vecteur d'état global prédéfini représentatif d'une situation de conduite dans laquelle le véhicule est en cours de dépassement d'un autre véhicule sera affecté d'un label n'autorisant pas la présentation au conducteur d'une telle requête. Dans ces différents cas, les labels affectés au vecteur d'état global de ces deux situations de conduite pourront avoir été définis soit lors d'une configuration préliminaire du véhicule, soit par des réponses données par un conducteur du véhicule lors d'essais préalables du véhicule.

Le système de communication multimédia selon l'invention comprend de plus un module de décision configuré pour comparer le vecteur d'état global de la situation de conduite, établi par l'organe de concaténation précédemment décrit, avec les vecteurs d'état globaux prédéfinis du cluster général de données, afin d'en déduire un label du vecteur global de la situation de conduite représentatif d'une autorisation ou d'une interdiction de présentation de la requête d'interaction au conducteur. En outre, selon l'invention, le module de communication est configuré pour présenter la requête à l'occupant du véhicule en fonction de ce label.

Selon une autre caractéristique de l'invention, le module de décision est configuré pour sélectionner, parmi les vecteurs d'état globaux prédéfinis du cluster général de données, des vecteurs d'état globaux prédéfinis dont le label comprend l'indicateur de type d'interaction de la requête d'interaction, c'est-à-dire les vecteurs d'état globaux prédéfinis qui ont un label dont la première partie est égale à l'indicateur affecté à la requête d'interaction. Ceci permet de réduire le champ de la comparaison afin d'optimiser celle-ci.

Selon une autre caractéristique, l'invention prévoit en outre que le module de décision est configuré pour comparer le vecteur d'état global de la situation de conduite aux vecteurs d'état globaux prédéfinis sélectionnés précédemment afin d'identifier le vecteur global prédéfini le plus proche du vecteur global de la situation de conduite pour en déduire un label provisoire du vecteur global de la situation de conduite.

Le vecteur d'état global prédéfini le plus proche du vecteur d'état global de la situation de conduite est ici à comprendre comme celui qui correspond à la situation de conduite prédéfinie la plus proche de la situation de conduite considérée. Le vecteur d'état global prédéfini le plus proche du vecteur d'état global de la situation de conduite peut, par exemple, être défini par une méthode euclidienne au sein d'un espace multidimensionnel représentant le cluster général de données. De la sorte, le système selon l'invention permet de définir une réponse à apporter à une situation de conduite donnée en se calquant sur des situations comparables déjà rencontrées ou préenregistrées dans le système.

Selon une autre caractéristique, l'invention prévoit que le module de gestion des requêtes est configuré pour enregistrer, dans le cluster général de données, le label du vecteur d'état global de la situation de conduite. En d'autres termes, l'invention prévoit d'enrichir le cluster général de données avec le vecteur d'état global de la situation de conduite affecté de son label. L'invention prévoit donc une forme d'auto-apprentissage du véhicule au fur et à mesure de l'enrichissement du cluster général de données avec des vecteurs d'état globaux de situations de conduite rencontrées par le conducteur du véhicule.

L'invention atteint bien ainsi le but qu'elle s'était fixé, en proposant un système de communication multimédia configuré pour affecter, à une requête d'interaction donnée, un label représentatif d'une autorisation de présentation ou d'une interdiction de présentation, ou non-présentation, de cette requête d'interaction. En d'autres termes, le système de communication selon l'invention permet donc d'effectuer une forme de tri, en fonction d'une situation de conduite du véhicule à un instant donné, d'une pluralité de requêtes d'interaction émises, à cet instant, par un agent multimédia du véhicule, et ce tri est effectué en fonction de paramètres représentatifs de la situation de conduite instantanée. Par le moyen d'auto-apprentissage qu'elle propose, l'invention permet d'enrichir la base de données utilisée pour effectuer le tri précité, c'est-à-dire le cluster général de données précédemment défini, cet enrichissement étant réalisé pour le conducteur du véhicule au fur et à mesure de ses expériences de conduite.

Selon un autre aspect, l'invention s'étend à un procédé de communication multimédia pour un véhicule automobile, caractérisé en ce qu'il comprend :
- une étape de transmission, au module de gestion des requêtes d'un système de communication tel qu'il vient d'être décrit, d'une requête d'interaction avec un occupant du véhicule, la requête d'interaction étant affectée d'un indicateur de type d'interaction,
- une étape de génération d'une pluralité de vecteurs d'état contextuels d'une situation de conduite du véhicule à un instant donné, chaque vecteur d'état contextuel regroupant une pluralité de paramètres contextuels d'une catégorie de paramètres contextuels de la situation de conduite du véhicule,
- une étape de concaténation des vecteurs d'état contextuels de la situation de conduite en un vecteur d'état global de la situation de conduite,
- une étape d'intégration du vecteur d'état global de la situation de conduite dans le cluster général de données précédemment défini,
- une étape d'affectation, au vecteur d'état global de la situation de conduite, et pour chaque type d'interaction, d'un label représentatif d'une autorisation ou d'une interdiction de présentation de la requête d'interaction à l'occupant du véhicule,
- une étape de présentation de la requête d'interaction à l'occupant du véhicule en fonction du label affecté au vecteur d'état global de la situation de conduite, la présentation de la requête d'interaction n'ayant lieu que si le label affecté est représentatif d'une autorisation de présentation de la requête d'interaction à l'occupant du véhicule,
- une étape d'enregistrement du vecteur d'état global de la situation de conduite affecté de son label dans le cluster général de données.

L'occupant du véhicule étant ici préférentiellement le conducteur, le procédé selon l'invention sera décrit dans ce qui suit pour cet occupant particulier. Préférentiellement, la requête d'interaction transmise au module de communication précédemment définie est préalablement affectée de son indicateur d'interaction, par exemple par le module de génération de requêtes d'interactions tel que précédemment défini. Selon une variante, l'indicateur de type d'interaction peut être affecté à la requête d'interaction par le module de communication lorsque celui-ci la reçoit.

Par ailleurs, il faut comprendre ici que l'instant auquel les vecteurs d'état contextuels de la situation de conduite sont définis correspond à l'instant auquel la requête d'interaction, affectée de son indicateur de type d'interaction, est transmise au module de communication.

Selon une caractéristique, le procédé selon l'invention comprend une étape préalable d'affectation d'une durée de vie à la requête d'interaction. Cette affectation peut, par exemple, être réalisée au sein du module de communication dès lors que celui-ci a reçu la requête d'interaction. En variante, cette durée de vie peut être affectée à la requête d'interaction au sein du module de génération de requêtes précédemment évoqué. Selon une caractéristique, l'étape d'affectation d'un label au vecteur d'état global de la situation de conduite comprend une étape de sélection, dans le cluster général de données, des vecteurs d'état globaux prédéfinis dont le label comprend l'indicateur du type d'interaction de la requête d'interaction, c'est-à-dire dont la première partie du label est égale à l'indicateur de type d'interaction affecté à la requête d'interaction. Selon une caractéristique, l'étape d'affectation d'un label au vecteur d'état global de la situation de conduite comprend une étape d'identification, dans le cluster général de données, du vecteur d'état global prédéfini le plus proche du vecteur d'état global de la situation de conduite.

Comme indiqué précédemment, le vecteur d'état global prédéfini le plus proche du vecteur d'état global de la situation de conduite peut être recherché par une méthode euclidienne telle que, par exemple, une mesure de distance dans l'espace multidimensionnel du cluster général de données.

Selon une caractéristique, l'étape d'affectation d'un label au vecteur d'état global de la situation de conduite comprend une étape d'affectation d'un label provisoire audit vecteur d'état global, le label provisoire étant identique au label du vecteur d'état global prédéfini le plus proche du vecteur d'état global de la situation de conduite.

Selon une caractéristique, l'étape de présentation de la requête d'interaction à l'occupant du véhicule est conditionnée par la valeur du label provisoire affecté au vecteur d'état global de la situation de conduite. C'est-à-dire que si le label provisoire précité est représentatif d'une autorisation de présentation de la requête au conducteur, cette requête est présentée au conducteur par le module de communication du système de communication selon l'invention, et si le label provisoire précité est représentatif d'une interdiction de présentation de la requête au conducteur, cette requête n'est pas présentée au conducteur par le module de communication du système de communication selon l'invention.

Selon une caractéristique, l'étape de présentation de la requête d'interaction à l'occupant du véhicule est conditionnée par la durée de vie de la requête d'interaction. Plus précisément, l'invention prévoit que l'étape de présentation de la requête d'interaction à l'occupant du véhicule est conditionnée par la durée de vie de la requête d'interaction dans le cas où le label provisoire affecté au vecteur d'état global de la situation de conduite interdit la présentation de ladite requête d'interaction. Plus précisément encore, l'invention prévoit que, dans le cas où le label provisoire affecté au vecteur d'état global de la situation de conduite interdit la présentation de la requête d'interaction au conducteur du véhicule, et si la durée de vie de la requête d'interaction n'est pas expirée, ladite requête d'interaction est provisoirement stockée pour être retransmise au module de communication à un instant ultérieur auquel le vecteur d'état global de la situation de conduite aura évolué de telle manière que le nouveau label provisoire qui lui sera affecté pourra éventuellement autoriser la présentation de cette requête d'interaction au conducteur du véhicule.

Dans le cas où le label provisoire affecté au vecteur d'état global de la situation de conduite interdit la présentation de la requête d'interaction à l'occupant du véhicule, et dès lors que la durée de vie de la requête d'interaction est atteinte, le label affecté au vecteur d'état global de la situation de conduite est défini comme étant égal au label provisoire précédemment évoqué, c'est-à-dire que le label affecté à la situation de conduite est représentatif d'une interdiction de présentation de la requête d'interaction à l'occupant du véhicule.

Selon une caractéristique, la valeur du label affecté au vecteur d'état global de la situation de conduite est conditionnée par la réponse de l'occupant du véhicule à la requête d'interaction. Plus précisément, dès lors que la requête d'interaction est présentée à l'occupant du véhicule, c'est-à-dire dès lors que le label provisoire affecté au vecteur d'état global de la situation de conduite est un label provisoire d'autorisation de présentation, deux cas peuvent se présenter :
- si l'occupant du véhicule répond à la requête d'interaction, le label affecté au vecteur d'état global de la situation de conduite est défini comme égal au label provisoire précédemment défini,
- si l'occupant du véhicule ne répond pas à la requête d'interaction, d'une part, le label affecté au vecteur d'état global de la situation de conduite est défini comme différent du label provisoire précédemment évoqué, et, d'autre part, le nouveau label affecté au vecteur d'état global de la situation de conduite est représentatif d'une interdiction de présentation de la requête d'interaction à l'occupant du véhicule.

On peut donc distinguer, dans l'étape d'affectation d'un label au vecteur d'état global de la situation de conduite, une première sous-étape d'affectation d'un label provisoire à ce vecteur d'état global, identique au label du vecteur d'état global prédéfini le plus proche, et une deuxième sous-étape d'affectation d'un label définitif au vecteur d'état global de la situation de conduite, selon le mécanisme suivant :
- si le label provisoire est représentatif d'une autorisation de présentation de la requête d'interaction, alors la requête d'interaction est présentée au conducteur par le module de communication, et si l'occupant répond à la requête d'interaction, alors le label définitif du vecteur d'état de la situation de conduite est égal à son label provisoire.

Il faut comprendre ici par "répondre" que l'occupant du véhicule effectue l'interaction prévue par l'indicateur de type d'interaction affecté à la requête.
- si le label provisoire est représentatif d'une autorisation de présentation de la requête d'interaction, alors la requête d'interaction est présentée au conducteur par le module de communication, et si l'occupant ne répond pas à la requête d'interaction, alors le label définitif du vecteur d'état de la situation de conduite est différent de son label provisoire, et il est représentatif d'une interdiction de présentation de la requête d'interaction.
- si le label provisoire est représentatif d'une interdiction de présentation de la requête d'interaction, alors la requête d'interaction n'est pas présentée au conducteur, et si la durée de vie de la requête d'interaction est atteinte, alors le label définitif du vecteur d'état global de la situation de conduite est égal à son label provisoire,
- enfin, si le label provisoire est représentatif d'une interdiction de présentation de la requête d'interaction, alors la requête d'interaction n'est pas présentée au conducteur, et si la durée de vie de la requête d'interaction n'est pas atteinte, alors le label définitif du vecteur d'état global de la situation de conduite n'est pas défini, et la requête d'interaction est provisoirement stockée pour être retransmise au module de communication à un instant ultérieur auquel le vecteur d'état global de la situation de conduite aura évolué de telle manière que le nouveau label provisoire qui lui sera affecté pourra éventuellement autoriser la présentation de cette requête d'interaction au conducteur du véhicule.

Dès lors qu'un label définitif est affecté au vecteur d'état global de la situation de conduite, le procédé selon l'invention prévoit que ce vecteur d'état global, affecté de son label définitif, est enregistré dans le cluster général de données, enrichissant ainsi ce dernier de nouvelles situations de conduite.

Le procédé selon l'invention permet donc, comme évoqué précédemment, d'effectuer un tri d'une ou plusieurs requêtes d'interaction qui peuvent être générées, à un instant donné, au sein du véhicule et à destination du conducteur. Par le mécanisme d'affectation, précédemment décrit, d'un label définitif au vecteur d'état global de la situation de conduite, et par l'enregistrement du vecteur d'état global de la situation de conduite à l'instant considéré, affecté de ce label définitif, dans le cluster général de données, le procédé selon l'invention permet de réaliser l'auto-apprentissage précédemment évoqué, enrichissant ainsi progressivement le cluster général de données et affinant ainsi la communication avec le conducteur tout en optimisant la sécurité du véhicule.

L'invention concerne également un véhicule automobile équipé d'un système de communication multimédia tel qu'il vient d'être décrit, notamment configuré pour mettre en œuvre le procédé tel qu'il vient d'être décrit.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une représentation schématique d'un véhicule équipé d'un système de communication multimédia selon l'invention de deux vecteurs d'état contextuels d'une même situation de conduite,
[fig 2] est une représentation schématique de deux vecteurs d'état contextuels d'une même situation de conduite, tels qu'ils peuvent être définis et mis en œuvre par le système de communication multimédia de la figure 1,
[fig 3] est une représentation schématique du vecteur d'état global d'une situation de conduite telle que celle pour laquelle un vecteur d'état contextuel illustré par la figure 1 a été défini,
[fig 4] est une représentation schématique du système de communication de la figure 1 selon l'invention,
[fig 5] est une représentation schématique d'un exemple de cluster général de données et de l'insertion du vecteur d'état global illustré par la figure 3 dans ce cluster général de données,
[fig 6] est une représentation schématique du déroulement du procédé selon l'invention,
[fig 7] est une représentation schématique d'un exemple de détermination du vecteur d'état global prédéfini le plus proche du vecteur d'état global illustré par la figure 3.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état antérieur de la technique.

Par ailleurs, les mêmes éléments seront désignés par les mêmes repères dans la description qui suit et dans les différentes figures annexées.

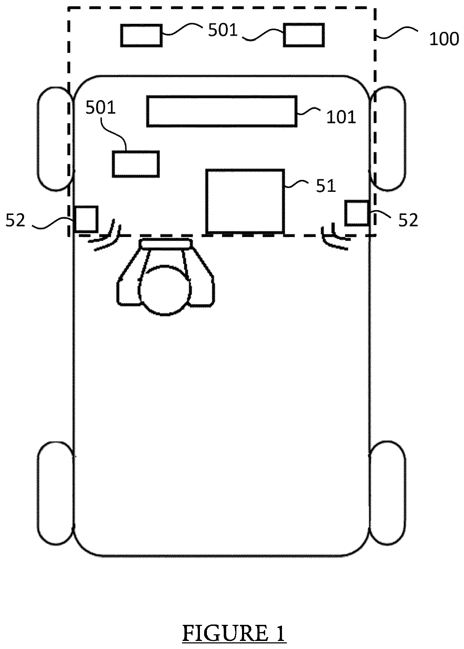

La figure 1 illustre schématiquement un véhicule automobile sur lequel est implanté un système de communication multimédia 100 selon l'invention, qui est notamment configuré pour générer des requêtes d'interaction 200 à destination d'un occupant du véhicule, et notamment le conducteur.

Le véhicule comporte notamment un module de communication 50, formant partie du système de communication multimédia, qui peut notamment consister en un écran tactile 51, apte à transmettre des informations visuelles à l'occupant du véhicule et à récupérer des informations transmises par l'occupant, et/ou en des ensembles audio 52 formant haut-parleur et microphone, apte à transmettre des informations auditives à l'occupant du véhicule et à récupérer des informations transmises à l'oral par l'occupant. Le système de communication multimédia 100 comporte un module de gestion 101, qui est configuré pour autoriser ou non une interaction à destination de l'occupant du véhicule, en traitant des données permettant de qualifier une requête de transmission et d'autoriser cette requête en fonction de la situation de conduite que l'occupant est en train de rencontrer.

Tel que cela va être décrit ci-après plus en détails, le module de gestion est notamment apte à mettre en œuvre un module d'analyse contextuelle définissant des vecteurs d'état contextuels qui sont regroupés en un vecteur d'état global de la situation de conduite, ainsi qu'un module de décision qui compare ce vecteur d'état global avec d'autres vecteurs d'état équivalents au sein d'un cluster général de données, de manière à définir la situation de conduite préenregistrée ou déjà rencontrée par le conducteur qui ressemble le plus à la situation de conduite en cours.

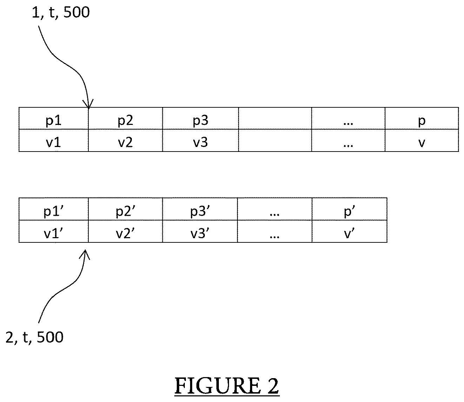

Un premier vecteur d'état contextuel 1 et un deuxième vecteur d'état contextuel 2, définis pour une même situation de conduite 500, sont illustrés sur la figure 2.

Le premier vecteur d'état contextuel 1 regroupe une pluralité de paramètres contextuels p1, p2, p3, ..., p, dont chacun présente une valeur, respectivement, v1, v2, v3 ..., v. Plus précisément, les paramètres contextuels p1, p2, p3, ..., p du premier vecteur d'état contextuel 1 sont tous relatifs à une même catégorie de paramètres contextuels. Ainsi, le premier vecteur d'état contextuel 1 est, par exemple, un vecteur d'état contextuel regroupant des paramètres p1, p2, p3, ..., p relatifs à la conduite et au conducteur du véhicule, pour une situation de conduite donnée. A titre d'exemples non exhaustifs, le paramètre p1 peut être représentatif d'un état de vigilance du conducteur, par exemple déterminé par un dispositif de mesure d'une mobilité du regard de celui-ci, le paramètre p2 peut être représentatif d'un nombre d'heures de roulage, le paramètre p3 peut être représentatif d'une fréquence d'interaction du conducteur du véhicule avec une interface du véhicule.

Le deuxième vecteur d'état contextuel 2 regroupe une pluralité de paramètres contextuels p1', p2', p3', ..., p' qui prennent des valeurs v1', v2', v3', ... v'. Le deuxième vecteur d'état contextuel 2 est défini pour la même situation de conduite 500, et notamment au même instant t que l'instant auquel est défini le premier vecteur d'état contextuel 1, et conformément à ce qui a été évoqué précédemment, les paramètres contextuels p1', p2', p3', ..., p' du deuxième vecteur d'état contextuel sont tous relatifs à une même catégorie de paramètres contextuels, ici relatifs à l'itinéraire sur lequel le véhicule se déplace. A titre d'exemples non exhaustifs, le paramètre p1' peut être représentatif d'un état fluide ou encombré de la circulation, le paramètre p2' peut être représentatif d'un éclairage diurne ou nocturne, le paramètre p3' peut être représentatif de la présence d'une zone de travaux sur l'itinéraire ou d'un évènement météorologique.

Tel qu'illustré sur la figure 2, le nombre p de paramètres contextuels du premier vecteur d'état contextuel 1 et le nombre p' de paramètres contextuels du deuxième vecteur d'état contextuel 2 peuvent être différents, mais il convient de noter que ces nombres peuvent être égaux sans sortir du contexte de l'invention.

Sur le même principe, une pluralité de vecteurs d'état contextuels 1, 2, 3, ..., n peut être définie pour décrire une pluralité d'aspects de la situation de conduite 500, que ces aspects soient relatifs au véhicule, à son environnement extérieur ou à son environnement intérieur à l'instant t donné auquel la situation de conduite 500 est attachée.

Chaque vecteur d'état contextuel 1, 2, 3 ..., n regroupe donc des paramètres contextuels d'une catégorie de paramètres de la situation de conduite 500, l'ensemble des vecteurs d'état contextuels 1, 2, 3, ... n, décrivant la situation de conduite 500 dans son ensemble.

Les valeurs v1, v1', ..., v, v' des paramètres p1, p1', ..., p, p' peuvent être soit des valeurs mesurées par des capteurs 501 placés dans le véhicule, ou à l'extérieur du véhicule, soit des valeurs attribuées arbitrairement en fonction d'une plage de variation prédéfinie du paramètre considéré. Ainsi, par exemple, un paramètre représentatif de la nervosité du pilotage pourra être valorisé en fonction du nombre d'accélérations et de freinages dont l'intensité dépasse un certain seuil et une valeur sur une échelle de 1 à 10 pourra être attribuée au style de conduite depuis le démarrage du véhicule jusqu'à l'instant t associé à l'instant de conduite 500, tandis qu'un paramètre représentatif d'un éclairage sur l'itinéraire sur lequel le véhicule circule pourra prendre une valeur arbitrairement définie à zéro pour un éclairage diurne, à un pour un éclairage nocturne, et, par exemple, à deux pour un éclairage artificiel.

Les plages de variation des valeurs v1, v1', ..., v, v' des paramètres p1, p1', ..., p, p' sont préalablement définies, par exemple par le constructeur du véhicule. Avantageusement, elles sont choisies pour que leur sensibilité permette de rendre compte de toute variation significative de chacun des paramètres contextuels.

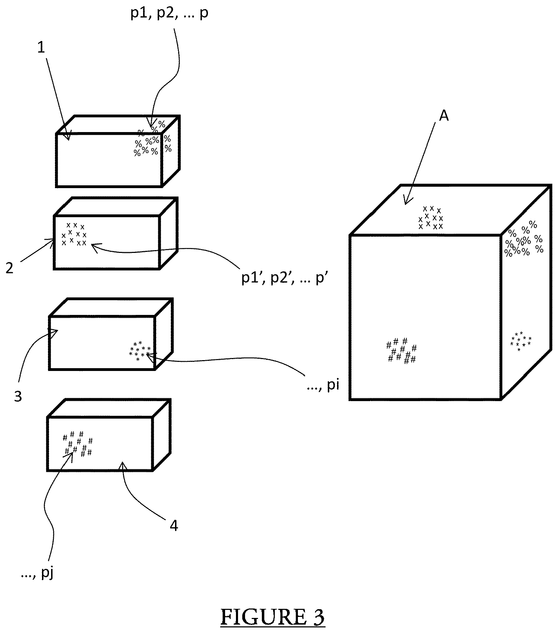

La figure 3 illustre la concaténation, précédemment définie, de l'ensemble des vecteurs d'état contextuels 1, 2, 3, ..., n décrivant la situation de conduite 500 en un vecteur d'état global A représentant cette situation de conduite.

Ici, la situation de conduite 500 est décrite par quatre vecteurs d'état contextuels 1, 2, 3, 4 regroupant chacun, respectivement, p, p', pi, pj paramètres contextuels tels que précédemment définis. Chaque paramètre contextuel de chaque vecteur d'état contextuel 1, 2, 3, 4, est ici représenté par un nuage de points, chaque vecteur d'état contextuel 1, 2, 3, 4, étant représenté par un volume en trois dimensions. De manière arbitraire, pour faciliter la lecture, chaque paramètre contextuel du premier vecteur d'état contextuel 1 est représenté sur la figure 3 par le symbole « % », chaque paramètre contextuel du deuxième vecteur d'état contextuel 2 est représenté par le symbole « x », chaque paramètre contextuel du troisième vecteur d'état contextuel 3 est représenté par le symbole « * », et chaque paramètre contextuel du quatrième vecteur d'état contextuel 4 est représenté par le symbole « # ».

Le vecteur d'état global A, regroupant l'ensemble des paramètres p1, p2, ..., p, p1', p2', ... p', ..., pi, ... pj des vecteurs d'état contextuels 1, 2, 3, 4 peut donc être représenté comme un espace multidimensionnel dont le nombre de dimensions est égal à la somme des dimensions des différents vecteurs d'état contextuels 1, 2, 3, 4 qui le constituent ou, en d'autres termes, dont le nombre de dimensions est égal au nombre total de paramètres contextuels p1, p2, ..., p, p1', p2', ..., p', ..., pi, ... pj de l'ensemble des vecteurs d'état contextuels 1, 2, 3, 4. Sur la figure 3, le vecteur d'état global A de la situation de conduite 500 est arbitrairement représenté par un volume en trois dimensions.

Il convient de comprendre que les dimensions du vecteur d'état global ne sont pas figées et qu'elles évoluent en fonction des vecteurs d'état contextuels considérés et du nombre de paramètres que chaque vecteur d'état contextuel comporte.

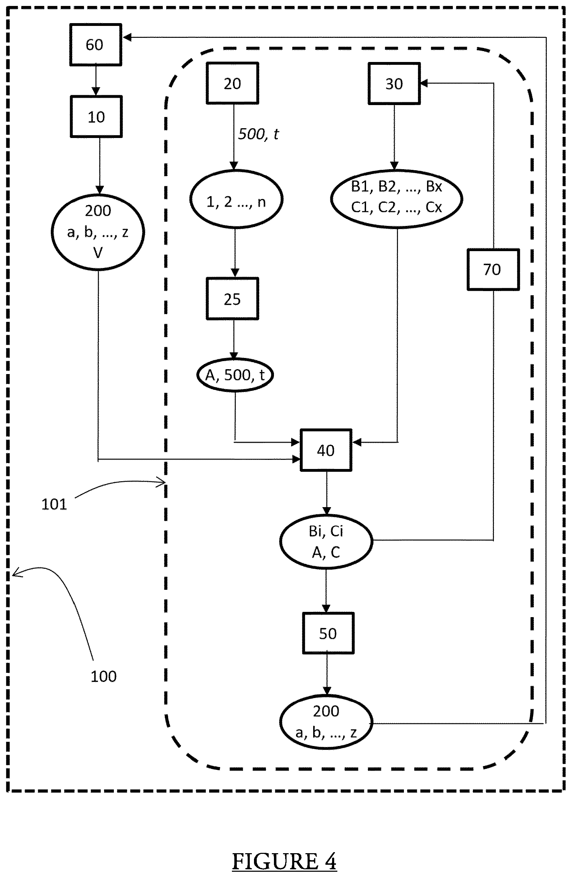

La figure 4 est une représentation schématique d'un exemple de réalisation d'un système de communication 100 selon l'invention.

En référence à la figure 4, le système de communication 100 pour véhicule automobile comprend un module 10 de génération de requêtes d'interaction 200. Selon l'exemple plus particulièrement illustré par la figure 4, le module de génération de requêtes 10 est configuré pour affecter, à chaque requête d'interaction 200, un indicateur de type d'interaction a, b, ..., z, ainsi qu'une durée de vie V pendant laquelle cette requête d'interaction doit être présentée pour être utile au conducteur.

Le système de communication 100 comprend également un module d'analyse contextuelle 20 dans lequel sont définis les vecteurs d'état contextuels 1, 2, ..., n précédemment décrits, décrivant une situation de conduite 500 à un instant t donné. Le module d'analyse contextuelle 20 comprend également un organe de concaténation 25 configuré pour regrouper les vecteurs d'état contextuels 1, 2, ..., n de la situation de conduite 500 à l'instant t en un vecteur d'état global A de celle-ci.

Le système de communication 100 comprend également un cluster général de données 30 qui est formé par une pluralité de vecteurs d'état globaux prédéfinis B1, B2, ..., Bx correspondant à une pluralité de situations de conduite 500, 600, ..., N du véhicule dans lequel est implanté le système de communication 100 selon l'invention.

En référence à ce qui précède, chaque vecteur d'état global prédéfini B1, B2, ..., Bx du cluster général de données 30 est affecté d'un label C1, C2, ..., Cx. Plus précisément, chaque label C1, C2, ..., Cx comporte, d'une part, une première partie égale à un type d'interaction a, b, ..., z, tel que précédemment défini, et, d'autre part, une deuxième partie représentative d'une autorisation ou d'une interdiction de présentation, au conducteur du véhicule, d'une requête d'interaction 200 présentant le type d'interaction considéré. Selon l'exemple plus particulièrement illustré ici, la deuxième partie du label C1, C2, ..., Cx, prend la forme "+" pour indiquer une autorisation de présentation d'une requête au conducteur et elle prend la forme "-" pour indiquer une interdiction de présentation d'une requête au conducteur.

Le système de communication 100 comprend également un module de décision 40 configuré pour comparer le vecteur d'état global A de la situation de conduite 500 avec les vecteurs d'état globaux prédéfinis B1, B2, ..., Bx, du cluster de données 30, afin d'en déduire un label C à associer au vecteur d'état global A, représentatif d'une autorisation ou d'une interdiction de présentation d'une requête d'interaction 200 au conducteur du véhicule.

Le module de décision 40 est notamment configuré pour intégrer le vecteur d'état global A de la situation de conduite 500 au cluster général de données 30 et pour identifier, au sein du cluster général de données 30, le vecteur d'état global prédéfini Bi le plus proche du vecteur d'état global A de la situation de conduite 500. Pour le type d'interaction induit par la requête d'interaction 200 précitée, le vecteur d'état global prédéfini Bi est affecté du label Ci et l'identification du vecteur d'état global le plus proche permet selon l'invention d'affecter au vecteur d'état global A de la situation de conduite le même label Ci.

Le système de communication 100 selon l'invention comprend de plus un module de communication 50 configuré pour présenter la requête d'interaction 200 précitée au conducteur du véhicule dès lors que le label C affecté au vecteur d'état global A de la situation de conduite 500 consiste en un label d'autorisation.

Le système de communication 100 comprend enfin, d'une part, un module 60 de stockage temporaire d'une ou plusieurs requêtes 200 et, d'autre part, un module 70 d'enregistrement, dans le cluster général de données 30, du vecteur d'état global A de la situation de conduite 500 affecté de son label C.

Le module d'analyse contextuelle 20 et son organe de concaténation 25, le cluster général de données 30, le module de décision 40 et l'organe d'enregistrement 70 précédemment définis sont regroupés dans un module de gestion des requêtes 101 du système de communication 100.

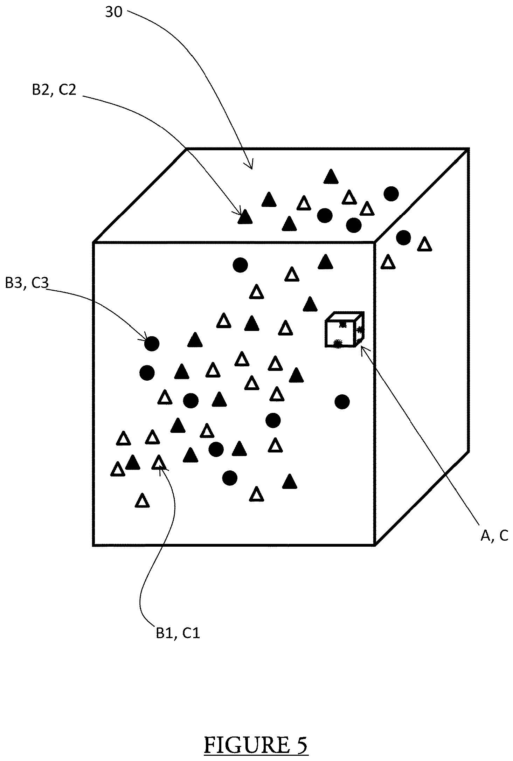

La figure 5 est une vue schématique du cluster général de données 30 tel que précédemment défini. Comme indiqué précédemment, le cluster général de données 30 est un ensemble de vecteur d'état globaux prédéfinis B1, B2, ..., Bx dont chacun est affecté d'un label C1, C2, ..., C, représentatif, d'une part, d'un type d'interaction a, b, ..., z, et, d'autre part, d'une autorisation "+" ou d'une interdiction "-" de présentation, au conducteur du véhicule, d'une requête d'interaction 200 induisant le type d'interaction a, b, ..., z, considéré. Comme indiqué précédemment, les vecteurs d'état globaux prédéfinis B1, B2, ..., Bx correspondent chacun à une situation de conduite préalablement définie, et les labels C1, C2, ..., Cx qui leur sont affectés sont préalablement définis, par exemple, lors de tests de conduite du véhicule préalablement à sa commercialisation, ou sur la base d'analogies avec des situations de conduite fréquemment rencontrées et connues.

A titre d'exemples non limitatifs, la première partie a, b, ..., z du label C1, ..., Cx peut représenter une interaction simple de type visuel, auditif, ou verbal, ou une interaction plus complexe, par exemple, sollicitant la vision du conducteur et réclamant une réponse tactile ou une réponse verbale de sa part.

Chaque vecteur d'état global B1, B2, ..., Bx du cluster général de données 30 est donc affecté d'un label C1, C2, ..., Cx de la forme a+, a-, ..., z+, z- pour les différents types d'interactions a, b, ..., z. Par exemple, si le vecteur d'état global B1 représente une situation de conduite 500 dans laquelle le véhicule est en cours de dépassement sur une chaussée sur laquelle le trafic est dense, il sera affecté d'un label de la forme v- indiquant qu'une requête sollicitant la vue du conducteur ne doit pas lui être présentée dans cette situation de conduite.

Il est à noter qu'un même vecteur d'état global Bi peut être affecté de plusieurs labels C1', ..., Cx', pour différents types d'interactions.

Selon l'exemple plus particulièrement illustré par la figure 5, le cluster général de données 30 comprend différents vecteurs d'état globaux prédéfinis B1, ..., Bx affectés de labels C1, ..., Cx, dont la première partie est respectivement représentative d'interactions de type auditif a, de type visuel v, et de type combiné w sollicitant la vision du conducteur et induisant une réponse tactile de sa part. Plus précisément, sur la figure 5, les vecteurs d'état globaux prédéfinis dont la première partie du label est représentative d'une interaction du type auditif a sont représentés par des triangles blancs, les vecteurs d'état globaux prédéfinis dont la première partie du label est représentative d'une interaction du type visuel v sont représentés par des triangles noirs, et les vecteurs d'état globaux prédéfinis dont la première partie du label est représentative d'une interaction du type combiné w sont représentés par des disques noirs.

Sur la figure 5 sont plus particulièrement identifiés un premier vecteur d'état global prédéfini B1 dont la première partie du label C1 est représentative d'une interaction auditive a, un deuxième vecteur global prédéfini B2 dont la première partie du label C2 est représentative d'une interaction visuelle v, et un troisième vecteur d'état global prédéfini B3 dont la première partie du label C3 est représentative d'une interaction combinée w telle que précitée.

Le vecteur d'état global A de la situation de conduite 500, précédemment défini, est également représenté sur la figure 5, inséré dans le cluster général de données 30.

Comme indiqué précédemment, l'invention prévoit qu'un label C est affecté au vecteur d'état global A. Plus précisément, l'invention prévoit que, pour chaque type d'interaction a, b, ..., w, z, le vecteur d'état global A est affecté d'un label C représentatif d'une autorisation ou d'une interdiction de présentation d'une requête induisant ce type d'interaction.

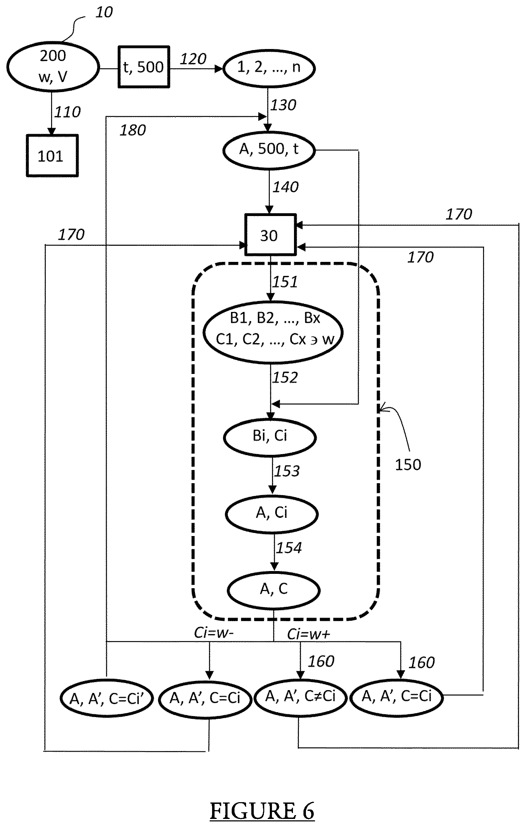

La figure 6 illustre plus particulièrement le procédé selon l'invention, dans le cas où une requête d'interaction 200 sollicitant la vision du conducteur et induisant une réponse tactile de sa part est émise par le module de génération de requêtes d'interactions 10 d'un véhicule automobile. La requête d'interaction 200 prise comme exemple ici pour illustrer le procédé selon l'invention est une requête d'interaction combinée w telle que précédemment décrite. La requête d'interaction 200 peut, par exemple, être une requête comportant l'affichage d'un message du type « un restaurant est à proximité, souhaitezvous vous y rendre ? » et induisant une réponse tactile « oui » ou « non » de la part du conducteur sur un écran d'interface de communication du véhicule.

Dans une première étape 110 du procédé selon l'invention, une requête d'interaction 200, émise par le module de génération de requêtes 10, est transmise, à un instant t, au module de gestion de requêtes 101 du système de communication 100 du véhicule équipé de l'invention.

Selon l'exemple plus particulièrement illustré par la figure 6, l'indicateur de type d'interaction w est attribué à la requête d'interaction 200 au sein du module de génération de requêtes 10. Selon d'autres exemples de réalisation, l'indicateur de type d'interaction w est attribué à la requête d'interaction 200 lors d'une première sous-étape 111, non représentée sur la figure 6, de la première étape 110.

L'invention prévoit en outre une durée de vie V qui est attribuée à la requête d'interaction 200 au sein du module de génération de requêtes 10. De même que l'indicateur de type d'interaction w, la durée de vie V peut être, selon différents exemples, attribuée à la requête d'interaction 200 lors d'une deuxième sous-étape 112, non représentée sur la figure 6, de la première étape 110 du procédé selon l'invention. Dans le cas où l'indicateur de type d'interaction w et la durée de vie V sont attribués à la requête d'interaction 200 respectivement lors d'une première sous-étape 111 et d'une deuxième sous-étape 112 de la première étape 110 du procédé selon l'invention, ces sous-étapes peuvent être réalisées consécutivement ou simultanément.

Dans une deuxième étape 120 du procédé selon l'invention, une pluralité de vecteurs d'état contextuels 1, 2, ..., n sont générés dans le module d'analyse contextuelle 20 précédemment décrit, pour la situation de conduite 500 correspondant à l'instant t auquel la requête d'interaction 200 a été transmise au module de gestion des requêtes 101. Comme indiqué précédemment, les vecteurs d'état contextuels 1, 2, ..., n regroupent chacun des paramètres contextuels p1, p1', ..., p, p' d'une catégorie de paramètres de la situation de conduite 500, et les valeurs v1, v1', ..., v, v', de ces différents paramètres sont prises à l'instant t précité pour établir les vecteurs d'état contextuels 1, 2, ..., n.

Dans une troisième étape 130 du procédé selon l'invention, les vecteurs d'état contextuels 1, 2, ..., n précités sont regroupés via l'organe de concaténation 25 précédemment décrit pour former le vecteur d'état global A de la situation de conduite 500 à l'instant t.

Dans une quatrième étape 140 du procédé selon l'invention, le vecteur d'état global A de la situation de conduite 500 à l'instant t est intégré au cluster général de données 30, précédemment décrit. Puis, dans une cinquième étape 150 du procédé selon l'invention, un label C est affecté au vecteur d'état global A de la situation de conduite 500 à l'instant t.

Plus précisément, la cinquième étape 150 précitée comprend une première sous-étape 151 de sélection, dans le cluster général de données 30, des vecteurs d'état globaux prédéfinis B1, ..., Bx dont la première partie du label C1, ... Cx, est égal à l'indicateur de type d'interaction w affecté à la requête d'interaction 300.

Dans une deuxième sous-étape 152 de la cinquième étape 150, le vecteur d'état global prédéfini Bi le plus proche du vecteur d'état global A de la situation de conduite 500 est identifié parmi les vecteurs d'état globaux prédéfinis lors de la première sous-étape 151 précédemment décrite.

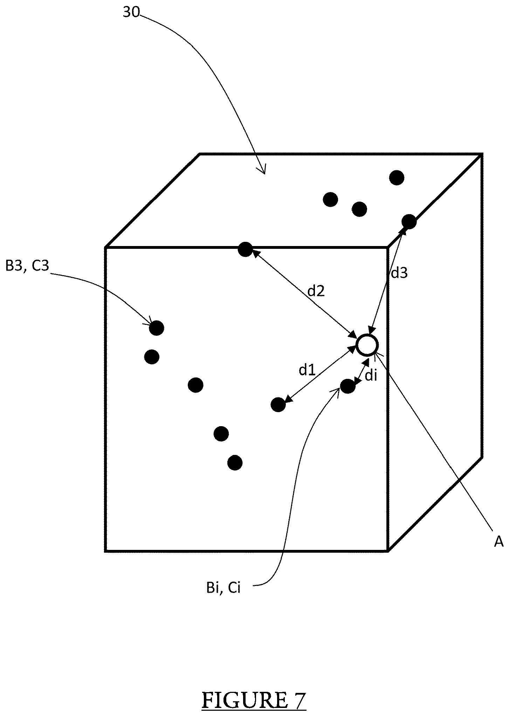

Un exemple de réalisation de la deuxième sous-étape 152 est plus particulièrement illustré par la figure 7. Sur cette figure, le vecteur d'état global A de la situation de conduite 500 est représenté par un disque blanc.

Selon l'exemple illustré ici, seuls les vecteurs d'état globaux prédéfinis du type B3, dont la première partie du label C3 est égale à l'indicateur de type d'interaction w, représentés par des disques noirs, sont pris en compte pour l'identification du vecteur d'état global prédéfini le plus proche du vecteur d'état global A.

Différentes mesures de distance d1, d2, d3, ..., di, calculées par exemple par une méthode euclidienne, sont réalisées entre le vecteur d'état global A de la situation de conduite 500 et des vecteurs d'état globaux prédéfinis sélectionnés lors de la première sous-étape 151, de manière à déterminer le vecteur d'état global prédéfini Bi le plus proche du vecteur d'état global A. Le vecteur d'état global prédéfini Bi est affecté d'un label Ci dont la première partie est égale à l'indicateur w précité, et dont la deuxième partie prend une valeur « + » ou « - » comme indiqué précédemment.

En référence à nouveau à la figure 6, la cinquième étape 150 du procédé selon l'invention comprend également une troisième sous-étape 153 lors de laquelle le label Ci du vecteur d'état global prédéfini Bi sélectionné lors de la deuxième sous-étape 152 est provisoirement affecté au vecteur d'état global A de la situation de conduite 500.

Dans une sous-étape ultérieure 154, le label provisoire Ci affecté au vecteur d'état global A de la situation de conduite 500 est examiné, et le label définitif C est affecté au vecteur d'état global A de la manière suivante.

Si le label provisoire Ci est représentatif d'une autorisation de présentation de la requête d'interaction 200, c'est-à-dire, en d'autres termes, et selon l'exemple illustré ici, si le label provisoire Ci est de la forme w+, la requête d'interaction 200 est présentée au conducteur du véhicule lors d'une sixième étape 160 du procédé selon l'invention :
- si le conducteur répond à la requête d'interaction 200, c'est-à-dire, en référence à ce qui précède, si le conducteur interagit de manière tactile avec l'écran d'interface du module de communication en réponse au message visuel diffusé par et écran d'interface, l'invention prévoit que le label C affecté à la requête d'interaction est de la forme w+, c'est-à-dire qu'il est égal au label provisoire Ci précédemment évoqué. L'invention prévoit en outre, dans ce cas, que le vecteur d'état global A de la situation de conduite 500, affecté de son label C égal au label provisoire Ci, est enregistré dans le cluster général de données 30 lors d'une septième étape 170 du procédé selon l'invention.
- si le conducteur ne répond pas à la requête d'interaction 200, c'est-à-dire, en référence à ce qui précède, si le conducteur n'interagit pas de manière tactile avec l'écran d'interface du module de communication en réponse au message visuel diffusé par celui-ci, l'invention prévoit que le label C affecté à la requête d'interaction 200 est de la forme w-, c'est-à-dire qu'il est différent du label provisoire Ci précédemment évoqué. L'invention prévoit en outre, dans ce cas, que le vecteur d'état global A de la situation de conduite 500, affecté de son nouveau label C, est enregistré dans le cluster général de données 30 lors de la septième étape 170 du procédé selon l'invention.

Si le label Ci est représentatif d'une interdiction de présentation de la requête d'interaction 200, c'est-à-dire, en d'autres termes, et selon l'exemple illustré ici, si le label provisoire Ci est de la forme w-, deux cas se présentent :
- si la durée de vie V de la requête d'interaction 200 est écoulée, l'invention prévoit que le label C affecté à la requête d'interaction 200 est de la forme w-, c'est-à-dire qu'il est égal au label provisoire Ci précédemment évoqué. L'invention prévoit en outre, dans ce cas, que le vecteur d'état global A de la situation de conduite 500, affecté de son label C égal au label provisoire Ci, est enregistré dans le cluster général de données 30 lors de la septième étape 170 du procédé selon l'invention.
- si la durée de vie V de la requête d'interaction 200 n'est pas écoulée, l'invention prévoit que la requête d'interaction 200 est temporairement stockée dans le module de stockage tampon 60 précédemment défini et illustré sur la figure 4, et qu'une étape supplémentaire 180 du procédé selon l'invention est lancée, reprenant plusieurs des étapes et sous-étapes précédemment décrites. L'invention prévoit en outre, dans ce cas, que la requête d'interaction 200 est ensuite renvoyée vers le module de gestion des requêtes 101.

Pour une nouvelle situation de conduite 500, correspondant à un nouvel instant t d'un nouvel envoi de la requête d'interaction 200, si le label provisoire Ci' qui est associé au vecteur d'état global A' de cette nouvelle situation de conduite est représentatif d'une autorisation de présentation de la requête d'interaction 200, cette dernière est présentée au conducteur, et le label définitif C affecté au vecteur d'état global A' est égal au label provisoire Ci' si le conducteur répond à la requête d'interaction 200, ou différent de celui-ci dans le cas contraire, comme précédemment décrit.

Si, lors de la nouvelle situation de conduite précitée 600, le label provisoire Ci' associé à son vecteur d'état global A' est à nouveau représentatif d'une interdiction de présentation de la requête d'interaction 200, et si la durée de vie V de cette dernière est écoulée, alors le label définitif C' affecté au vecteur d'état global A' est égal au label provisoire Ci' comme précédemment décrit, c'est-à-dire qu'il est représentatif d'une interdiction de présentation de la requête d'interaction 200.

Autrement dit, dès lors que le label provisoire Ci affecté au vecteur d'état global A de la situation de conduite 500 précédemment évoquée, est représentatif d'une interdiction de présentation de la requête d'interaction 200, c'est-à-dire, selon l'exemple plus particulièrement illustré ici, dès lors que le label provisoire Ci affecté au vecteur d'état global A de la situation de conduite 500 est de la forme w-, la requête d'interaction 200 est stockée et présentée à nouveau au module de gestion des requêtes 101 à un nouvel instant t, tant que la durée de vie V de la requête d'interaction 200 n'est pas écoulée, dans l'éventualité où le label provisoire Ci' affecté au vecteur d'état global A' d'une nouvelle situation de conduite à un nouvel instant t pourrait être représentatif d'une autorisation de présentation de la requête d'interaction 200.

Par le biais de l'autorisation ou de l'interdiction de présentation des requêtes d'interaction 200, l'invention, telle qu'elle vient d'être décrite, permet bien de réaliser un tri d'une pluralité de telles requêtes d'interaction afin que leur éventuelle présentation au conducteur du véhicule ne remette pas en cause la sécurité de conduite de ce véhicule.

## Revendications

1. Système de communication multimédia (100) pour véhicule automobile configuré pour générer des requêtes d'interaction (200), pour attribuer à chacune des requêtes d'interaction (200) un indicateur (a, b, ..., z) représentatif d'un type d'interaction, et pour transmettre ces requêtes d'interaction (200) à un occupant du véhicule via un module de communication (50), **caractérisé en ce qu'**il comprend un module (101) de gestion des requêtes d'interaction (200) qui comporte :
- un module d'analyse contextuelle (20) configuré, d'une part, pour définir, sur la base d'une pluralité de données contextuelles d'une situation de conduite (500) du véhicule à un instant (t) donné, une pluralité de vecteurs d'état contextuels (1, 2, ..., n) de la situation de conduite (500), chaque vecteur d'état contextuel (1, 2, ..., n) regroupant une pluralité de paramètres contextuels (p1, ..., p, p1', ..., p', ..., pi, ..., pj) de la situation de conduite (500),
- un organe de concaténation (25) configuré pour réunir les vecteurs d'état contextuels (1, 2, ..., n) de la situation de conduite (500) en un vecteur d'état global (A) de la situation de conduite (500),
- un cluster général de données (30) dans lequel sont enregistrés une pluralité de vecteurs d'état globaux prédéfinis (B1, B2, ..., Bx) dont chacun est affecté, pour chaque type d'interaction (a, b, ..., z), d'un label (C1, C2, ..., Cx) représentatif d'une autorisation ou d'une interdiction de présentation de la requête d'interaction (200) à l'occupant du véhicule,
- un module de décision (40) configuré pour comparer le vecteur d'état global (A) de la situation de conduite (500) avec les vecteurs d'état globaux prédéfinis (B1, B2, ..., Bx) du cluster général de données (30) afin d'en déduire un label (C) du vecteur d'état global (A) de la situation de conduite (500) représentatif d'une autorisation ou d'une interdiction de présentation de la requête d'interaction (200) à l'occupant du véhicule, le module de gestion des requêtes (101) étant configuré pour commander le module de communication (50) à présenter la requête d'interaction (200) à l'occupant du véhicule en fonction du label (C) du vecteur d'état global (A) de la situation de conduite (500).

2. Système de communication (100) selon la revendication précédente, **caractérisé en ce que** le module de décision (40) est configuré pour sélectionner, parmi les vecteurs d'état globaux prédéfinis (B1, B2, ..., Bx) du cluster général de données (30), des vecteurs d'état globaux prédéfinis dont le label (C1, C2, ..., Cx) comprend l'indicateur (a, b, ..., z) du type de la requête d'interaction (200).

3. Système de communication (100) selon la revendication précédente, **caractérisé en ce que** le module de décision (40) est configuré pour comparer le vecteur d'état global (A) de la situation de conduite (500) avec les vecteurs d'état globaux prédéfinis (B1, B2, ..., Bx) dont le label (C1, C2, ..., Cx) comprend l'indicateur de type d'interaction (a, b, ..., z) de la requête d'interaction (200), afin d'identifier le vecteur d'état global prédéfini (Bi) le plus proche du vecteur d'état global (A) de la situation de conduite (500) pour en déduire un label provisoire (Ci) du vecteur d'état global (A) de la situation de conduite (500).

4. Système de communication (100) selon la revendication précédente, **caractérisé en ce que** le module de gestion des requêtes (101) est configuré pour enregistrer, dans le cluster général de données (30), le label (C) du vecteur d'état global (A) de la situation de conduite (500).

5. Procédé de communication multimédia pour un véhicule automobile, **caractérisé en ce qu'**il comprend :
- une étape (110) de transmission, au module de gestion des requêtes (101) d'un système de communication multimédia (100) selon la revendication précédente, d'une requête d'interaction (200) avec un occupant du véhicule, affectée d'un indicateur (a, b, ..., z) du type d'interaction que la requête d'interaction (200) induit,
- une étape (120) de génération d'une pluralité de vecteurs d'état contextuels (1, 2, ..., n) d'une situation de conduite (500) du véhicule à un instant (t) donné, chaque vecteur d'état contextuel (1, 2, ..., n) regroupant une pluralité de paramètres contextuels (p1, ..., p, p1', ..., p', ..., pi, ..., pj) de la situation de conduite (500) du véhicule,
- une étape (130) de concaténation des vecteurs d'état contextuels (1, 2, ..., n) de la situation de conduite (500) en un vecteur d'état global (A) de la situation de conduite (500),
- une étape (140) d'intégration du vecteur d'état global (A) de la situation de conduite (500) dans le cluster général de données (30),
- une étape (150) d'affectation, au vecteur d'état global (A) de la situation de conduite (500), et pour chaque type d'interaction (a, b, ..., z), d'un label (C) représentatif d'une autorisation ou d'une interdiction de présentation de la requête d'interaction (200) à l'occupant du véhicule,
- une étape (160) de présentation de la requête d'interaction (200) à l'occupant du véhicule en fonction du label (C) affecté au vecteur d'état global (A) de la situation de conduite (500), la présentation de la requête d'interaction (200) n'ayant lieu que si le label (C) affecté est représentatif d'une autorisation de présentation de la requête d'interaction à l'occupant du véhicule,
- une étape (170) d'enregistrement du vecteur d'état global (A) de la situation de conduite (500), affecté de son label (C), dans le cluster général de données (30).

6. Procédé selon la revendication précédente, **caractérisé en ce qu'**il comprend une étape (112) d'affectation d'une durée de vie (V) à la requête d'interaction (200).

7. Procédé selon l'une des revendications 5 ou 6, dans lequel l'étape (150) d'affectation d'un label (C) au vecteur d'état global (A) de la situation de conduite (500) comprend une étape (151) de sélection, dans le cluster général de données (30), des vecteurs d'état globaux prédéfinis (B1, B2, ..., Bx) dont le label (C1, C2, ..., Cx) comprend l'indicateur (a, b, ..., z) du type d'interaction de la requête d'interaction (200).

8. Procédé selon la revendication précédente, dans lequel l'étape (150) d'affectation d'un label (C) au vecteur d'état global (A) de la situation de conduite (500) comprend une étape (152) d'identification, dans le cluster général de données (30), du vecteur d'état global prédéfini (Bi) le plus proche du vecteur d'état global (A) de la situation de conduite (500).

9. Procédé selon la revendication précédente, dans lequel l'étape (150) d'affectation d'un label (C) au vecteur d'état global (A) de la situation de conduite (500) comprend une étape (153) d'affectation d'un label provisoire (Ci) audit vecteur d'état global (A), le label provisoire (Ci) étant identique au label (Ci) du vecteur d'état global prédéfini (Bi) le plus proche du vecteur d'état global (A) de la situation de conduite (500).

10. Procédé selon la revendication précédente, dans lequel l'étape (160) de présentation de la requête d'interaction (200) à l'occupant du véhicule est conditionnée par la valeur du label provisoire (Ci) affecté au vecteur d'état global (A) de la situation de conduite (500).

11. Procédé selon la revendication précédente, dans lequel l'étape (160) de présentation de la requête d'interaction (200) à l'occupant du véhicule est conditionnée par la durée de vie (V) de la requête d'interaction (200).

12. Procédé selon l'une ou l'autre des revendications 10 ou 11, dans lequel la valeur du label (C) affecté au vecteur d'état global (A) de la situation de conduite (500) est conditionnée par la réponse de l'occupant du véhicule à la requête d'interaction (200).

13. Véhicule automobile équipé d'un système de communication multimédia (100) selon l'une quelconque des revendications 1 à 4, configuré pour mettre en œuvre le procédé selon l'une quelconque des revendications 5 à 12.

## Patentansprüche

1. Multimedia-Kommunikationssystem (100) für ein Kraftfahrzeug, das dazu ausgestaltet ist, Interaktionsaufforderungen (200) zu erzeugen, jeder der Interaktionsaufforderungen (200) einen für einen Interaktionstyp repräsentativen Indikator (a, b, ..., z) zuzuordnen und diese Interaktionsaufforderungen (200) über ein Kommunikationsmodul (50) an einen Insassen des Fahrzeugs zu übertragen, **dadurch gekennzeichnet, dass** es ein Modul (101) zur Verwaltung der Interaktionsaufforderungen (200) umfasst, das beinhaltet:
- ein Modul zur kontextuellen Analyse (20), das dazu ausgestaltet ist, zum einen auf der Basis einer Mehrzahl von kontextuellen Daten einer Fahrsituation (500) des Fahrzeugs zu einem gegebenen Zeitpunkt (t) eine Mehrzahl von kontextuellen Zustandsvektoren (1, 2, ..., n) der Fahrsituation (500) zu definieren, wobei jeder kontextuelle Zustandsvektor (1, 2, ..., n) eine Mehrzahl von kontextuellen Parametern (p1, ..., p, p1', ..., p', ..., pi, ..., pj) der Fahrsituation (500) zusammenfasst,
- ein Verkettungselement (25), das dazu ausgestaltet ist, die kontextuellen Zustandsvektoren (1, 2, ..., n) der Fahrsituation (500) zu einem globalen Zustandsvektor (A) der Fahrsituation (500) zu vereinen,
- einen allgemeinen Datencluster (30), in dem eine Mehrzahl von vorgegebenen globalen Zustandsvektoren (B1, B2, ..., Bx) gespeichert sind, von denen jedem, für jeden Interaktionstyp (a, b, ..., z), ein Label (C1, C2, ..., Cx) zugewiesen ist, das für eine Genehmigung oder ein Verbot der Präsentation der Interaktionsaufforderung (200) gegenüber dem Insassen des Fahrzeugs repräsentativ ist,
- ein Entscheidungsmodul (40), das dazu ausgestaltet ist, den globalen Zustandsvektor (A) der Fahrsituation (500) mit den vorgegebenen globalen Zustandsvektoren (B1, B2, ..., Bx) des allgemeinen Datenclusters (30) zu vergleichen, um daraus ein Label (C) des globalen Zustandsvektors (A) der Fahrsituation (500) abzuleiten, das für eine Genehmigung oder ein Verbot der Präsentation der Interaktionsaufforderung (200) gegenüber dem Insassen des Fahrzeugs repräsentativ ist, wobei das Modul zur Verwaltung der Aufforderungen (101) dazu ausgestaltet ist, das Kommunikationsmodul (50) zu steuern, die Interaktionsaufforderung (200) gegenüber dem Insassen des Fahrzeugs in Abhängigkeit von dem Label (C) des globalen Zustandsvektors (A) der Fahrsituation (500) zu präsentieren.

2. Kommunikationssystem (100) nach dem vorhergehenden Anspruch, **dadurch gekennzeichnet, dass** das Entscheidungsmodul (40) dazu ausgestaltet ist, unter den vorgegebenen globalen Zustandsvektoren (B1, B2, ..., Bx) des allgemeinen Datenclusters (30) vorgegebene globale Zustandsvektoren auszuwählen, deren Label (C1, C2, ..., Cx) den Indikator (a, b, ..., z) des Typs der Interaktionsaufforderung (200) umfasst.

3. Kommunikationssystem (100) nach dem vorhergehenden Anspruch, **dadurch gekennzeichnet, dass** das Entscheidungsmodul (40) dazu ausgestaltet ist, den globalen Zustandsvektor (A) der Fahrsituation (500) mit den vorgegebenen globalen Zustandsvektoren (B1, B2, ..., Bx) zu vergleichen, deren Label (C1, C2, ..., Cx) den Indikator des Interaktionstyps (a, b, ..., z) der Interaktionsaufforderung (200) umfasst, um den vorgegebenen globalen Zustandsvektor (Bi) zu ermitteln, der dem globalen Zustandsvektor (A) der Fahrsituation (500) am nächsten kommt, um daraus ein provisorisches Label (Ci) des globalen Zustandsvektors (A) der Fahrsituation (500) herzuleiten.

4. Kommunikationssystem (100) nach dem vorhergehenden Anspruch, **dadurch gekennzeichnet, dass** das Modul zur Verwaltung der Aufforderungen (101) dazu ausgestaltet ist, in dem allgemeinen Datencluster (30) das Label (C) des globalen Zustandsvektors (A) der Fahrsituation (500) zu speichern.

5. Multimedia-Kommunikationsverfahren für ein Kraftfahrzeug, **dadurch gekennzeichnet, dass** es umfasst:
- einen Schritt (110) des Übertragens, an das Modul zur Verwaltung der Aufforderungen (101) eines Multimedia-Kommunikationssystems (100) nach dem vorhergehenden Anspruch, einer Aufforderung zur Interaktion (200) mit einem Insassen des Fahrzeugs, der ein Indikator (a, b, ..., z) des Interaktionstyps zugewiesen ist, den die Interaktionsaufforderung (200) bewirkt,
- einen Schritt (120) des Erzeugens einer Mehrzahl von kontextuellen Zustandsvektoren (1, 2, ..., n) einer Fahrsituation (500) des Fahrzeugs zu einem gegebenen Zeitpunkt (t), wobei jeder kontextuelle Zustandsvektor (1, 2, ..., n) eine Mehrzahl von kontextuellen Parametern (p1, ..., p, p1', ..., p', ..., pi, ..., pj) der Fahrsituation (500) des Fahrzeugs zusammenfasst,
- einen Schritt (130) des Verkettens der kontextuellen Zustandsvektoren (1, 2, ..., n) der Fahrsituation (500) zu einem globalen Zustandsvektor (A) der Fahrsituation (500),
- einen Schritt (140) des Integrierens des globalen Zustandsvektors (A) der Fahrsituation (500) in den allgemeinen Datencluster (30),
- einen Schritt des Zuweisens (150), zu dem globalen Zustandsvektor (A) der Fahrsituation (500), und für jeden Interaktionstyp (a, b, ..., z), eines Labels (C), das für eine Genehmigung oder ein Verbot der Präsentation der Interaktionsaufforderung (200) gegenüber dem Insassen des Fahrzeugs repräsentativ ist,
- einen Schritt (160) des Präsentierens der Interaktionsaufforderung (200) gegenüber dem Insassen des Fahrzeugs in Abhängigkeit von dem Label (C), das dem globalen Zustandsvektor (A) der Fahrsituation (500) zugewiesen ist, wobei das Präsentieren der Interaktionsaufforderung (200) nur stattfindet, wenn das zugewiesene Label (C) für eine Genehmigung zur Präsentation der Interaktionsaufforderung gegenüber dem Insassen des Fahrzeugs repräsentativ ist,
- einen Schritt (170) des Speicherns des globalen Zustandsvektors (A) der Fahrsituation (500), dem sein Label (C) zugewiesen ist, in dem allgemeinen Datencluster (30).

6. Verfahren nach dem vorhergehenden Anspruch, **dadurch gekennzeichnet, dass** es einen Schritt (112) des Zuweisens einer Lebensdauer (V) zu der Interaktionsaufforderung (200) umfasst.

7. Verfahren nach einem der Ansprüche 5 oder 6, wobei der Schritt (150) des Zuweisens eines Labels (C) zu dem globalen Zustandsvektor (A) der Fahrsituation (500) einen Schritt (151) des Auswählens, in dem allgemeinen Datencluster (30), der vorgegebenen globalen Zustandsvektoren (B1, B2, ..., Bx) umfasst, deren Label (C1, C2, ..., Cx) den Indikator (a, b, ..., z) des Interaktionstyps der Interaktionsaufforderung (200) umfasst.

8. Verfahren nach dem vorhergehenden Anspruch, wobei der Schritt (150) des Zuweisens eines Labels (C) zu dem globalen Zustandsvektor (A) der Fahrsituation (500) einen Schritt (152) des Ermittelns, in dem allgemeinen Datencluster (30), des vorgegebenen globalen Zustandsvektors (Bi) umfasst, der dem globalen Zustandsvektor (A) der Fahrsituation (500) am nächsten kommt.

9. Verfahren nach dem vorhergehenden Anspruch, wobei der Schritt (150) des Zuweisens eines Labels (C) zu dem globalen Zustandsvektor (A) der Fahrsituation (500) einen Schritt (153) des Zuweisens eines provisorischen Labels (Ci) zu dem globalen Zustandsvektor (A) umfasst, wobei das provisorische Label (Ci) identisch mit dem Label (Ci) des vorgegebenen globalen Zustandsvektors (Bi) ist, der dem globalen Zustandsvektor (A) der Fahrsituation (500) am nächsten kommt.

10. Verfahren nach dem vorhergehenden Anspruch, wobei der Schritt (160) des Präsentierens der Interaktionsaufforderung (200) gegenüber dem Insassen des Fahrzeugs durch den Wert des provisorischen Labels (Ci) bedingt ist, das dem globalen Zustandsvektor (A) der Fahrsituation (500) zugewiesen ist.

11. Verfahren nach dem vorhergehenden Anspruch, wobei der Schritt (160) des Präsentierens der Interaktionsaufforderung (200) gegenüber dem Insassen des Fahrzeugs durch die Lebensdauer (V) der Interaktionsaufforderung (200) bedingt ist.

12. Verfahren nach dem einen oder anderen der Ansprüche 10 oder 11, wobei der Wert des Labels (C), das dem globalen Zustandsvektor (A) der Fahrsituation (500) zugewiesen ist, durch die Antwort des Insassen des Fahrzeugs auf die Interaktionsaufforderung (200) bedingt ist.

13. Kraftfahrzeug, das mit einem Multimedia-Kommunikationssystem (100) nach einem der Ansprüche 1 bis 4 ausgestattet ist, das dazu ausgestaltet ist, das Verfahren nach einem der Ansprüche 5 bis 12 auszuführen.

## Claims

1. Multimedia motor-vehicle communication system (100) configured to generate interaction requests (200), to assign to each of the interaction requests (200) an indicator (a, b,..., z) representative of a type of interaction, and to transmit these interaction requests (200) to an occupant of the vehicle via a communication module (50), **characterized in that** it comprises a request management module (101) for managing interaction requests (200), which comprises:
- a contextual analysis module (20) configured, on the one hand, to define, on the basis of a plurality of contextual data of a driving situation (500) of the vehicle at a given time (t), a plurality of contextual state vectors (1, 2,..., n) of the driving situation (500), each contextual state vector (1, 2,..., n) containing a plurality of contextual parameters (p1,..., p, p1',..., p',..., pi,..., pj) of the driving situation (500),
- a concatenation unit (25) configured to combine the contextual state vectors (1, 2,..., n) of the driving situation (500) into an overall state vector (A) of the driving situation (500),
- a general data cluster (30) in which a plurality of predefined overall state vectors (B1, B2,..., Bx) are stored, each of which is assigned, for each type of interaction (a, b,..., z), a label (C1, C2,..., Cx) representative of a permission or prohibition to present the interaction request (200) to the occupant of the vehicle,
- a decision module (40) configured to compare the overall state vector (A) of the driving situation (500) with the predefined overall state vectors (B1, B2,..., Bx) of the general data cluster (30) in order to derive therefrom a label (C) of the overall state vector (A) of the driving situation (500) representative of a permission or prohibition to present the interaction request (200) to the occupant of the vehicle, the request management module (101) being configured to command the communication module (50) to present the interaction request (200) to the occupant of the vehicle depending on the label (C) of the overall state vector (A) of the driving situation (500).

2. Communication system (100) according to the preceding claim, **characterized in that** the decision module (40) is configured to select, from the predefined overall state vectors (B1, B2,..., Bx) of the general data cluster (30), predefined overall state vectors the label (C1, C2,..., Cx) of which comprises the indicator (a, b,..., z) of the type of the interaction request (200).

3. Communication system (100) according to the preceding claim, **characterized in that** the decision module (40) is configured to compare the overall state vector (A) of the driving situation (500) with the predefined overall state vectors (B1, B2,..., Bx) the label (C1, C2,..., Cx) of which comprises the interaction-type indicator (a, b,..., z) of the interaction request (200), in order to identify the predefined overall state vector (Bi) closest to the overall state vector (A) of the driving situation (500) with a view to deriving therefrom a provisional label (Ci) of the overall state vector (A) of the driving situation (500).

4. Communication system (100) according to the preceding claim, **characterized in that** the request management module (101) is configured to store, in the general data cluster (30), the label (C) of the overall state vector (A) of the driving situation (500).

5. Multimedia communication method for a motor vehicle, **characterized in that** it comprises:
- a step (110) of transmitting, to the request management module (101) of a multimedia communication system (100) according to the preceding claim, a request (200) for interaction with an occupant of the vehicle, which request is assigned an indicator (a, b,..., z) of the type of interaction that the interaction request (200) induces,
- a step (120) of generating a plurality of contextual state vectors (1, 2,..., n) of a driving situation (500) of the vehicle at a given time (t), each contextual state vector (1, 2,..., n) containing a plurality of contextual parameters (p1,..., p, p1',..., p',..., pi,..., pj) of the driving situation (500) of the vehicle,
- a step (130) of concatenating the contextual state vectors (1, 2,..., n) of the driving situation (500) into an overall state vector (A) of the driving situation (500),
- a step (140) of integrating the overall state vector (A) of the driving situation (500) into the general data cluster (30),
- a step (150) of assigning, to the overall state vector (A) of the driving situation (500), and for each type of interaction (a, b,..., z), a label (C) representative of a permission or prohibition to present the interaction request (200) to the occupant of the vehicle,
- a step (160) of presenting the interaction request (200) to the occupant of the vehicle depending on the label (C) assigned to the overall state vector (A) of the driving situation (500), the interaction request (200) being presented only if the assigned label (C) is representative of a permission to present the interaction request to the occupant of the vehicle,
- a step (170) of storing the overall state vector (A) of the driving situation (500), assigned its label (C), in the general data cluster (30).

6. Method according to the preceding claim, **characterized in that** it comprises a step (112) of assigning a lifetime (V) to the interaction request (200).

7. Method according to either of Claims 5 and 6, wherein the step (150) of assigning a label (C) to the overall state vector (A) of the driving situation (500) comprises a step (151) of selecting, in the general data cluster (30), predefined overall state vectors (B1, B2,..., Bx) the label (C1, C2,..., Cx) of which comprises the indicator (a, b,..., z) of the type of interaction of the interaction request (200).

8. Method according to the preceding claim, wherein the step (150) of assigning a label (C) to the overall state vector (A) of the driving situation (500) comprises a step (152) of identifying, in the general data cluster (30), the predefined overall state vector (Bi) closest to the overall state vector (A) of the driving situation (500).

9. Method according to the preceding claim, wherein the step (150) of assigning a label (C) to the overall state vector (A) of the driving situation (500) comprises a step (153) of assigning a provisional label (Ci) to said overall state vector (A), the provisional label (Ci) being identical to the label (Ci) of the predefined overall state vector (Bi) closest to the overall state vector (A) of the driving situation (500).

10. Method according to the preceding claim, wherein the step (160) of presenting the interaction request (200) to the occupant of the vehicle is conditional upon the value of the provisional label (Ci) assigned to the overall state vector (A) of the driving situation (500).

11. Method according to the preceding claim, wherein the step (160) of presenting the interaction request (200) to the occupant of the vehicle is conditional upon the lifetime (V) of the interaction request (200).

12. Method according to either of Claims 10 and 11, wherein the value of the label (C) assigned to the overall state vector (A) of the driving situation (500) is conditional upon the response of the occupant of the vehicle to the interaction request (200).

13. Motor vehicle equipped with a multimedia communication system (100) according to any of Claims 1 to 4, configured to implement the method according to any of Claims 5 to 12.
